(19) Europäisches Patentamt
European Patent Office
Office européen des brevets

(11) **EP 2 953 269 B1**

(12) **FASCICULE DE BREVET EUROPEEN**

(45) Date de publication et mention de la délivrance du brevet:
**18.10.2017 Bulletin 2017/42**

(51) Int Cl.:
***H04B 3/32*** *(2006.01)*     ***H04B 3/54*** *(2006.01)*
***H04W 52/04*** *(2009.01)*

(21) Numéro de dépôt: **15170273.5**

(22) Date de dépôt: **02.06.2015**

(54) **PROCÉDÉ DE CONFIGURATION D'UN DISPOSITIF NOEUD DANS UN RÉSEAU DE COMMUNICATION SOUS FORME D'ARBRE IMPLÉMENTÉ SUR UN RÉSEAU D'ALIMENTATION ÉLECTRIQUE**

KONFIGURATIONSVERFAHREN EINER KNOTENVORRICHTUNG IN EINEM BAUMFÖRMIGEN KOMMUNIKATIONSNETZ, DAS IN EIN STROMVERSORGUNGSNETZ EINGEBAUT IST

METHOD FOR CONFIGURING A NODE DEVICE IN A TREE-SHAPED COMMUNICATION NETWORK IMPLEMENTED OVER A POWER SUPPLY NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2014 FR 1455016**

(43) Date de publication de la demande:
**09.12.2015 Bulletin 2015/50**

(73) Titulaire: **SAGEMCOM ENERGY & TELECOM SAS**
**92500 Rueil-Malmaison (FR)**

(72) Inventeurs:
• **Teboulle, Henri**
**92500 Rueil Malmaison (FR)**
• **Sergi, Jérémie**
**92500 Rueil Malmaison (FR)**
• **Moro, Paolo**
**92500 Rueil Malmaison (FR)**

(74) Mandataire: **Le Guen-Maillet**
**5, place de Newquay**
**BP 70250**
**35802 Dinard Cedex (FR)**

(56) Documents cités:
**US-A1- 2011 111 766    US-A1- 2013 107 758**

• **IBERDROLA ET AL: "G.hnem: PRIME Specification Revision 1.3E;TD10GS1-039", ITU-T DRAFT ; STUDY PERIOD 2009-2012, INTERNATIONAL TELECOMMUNICATION UNION, GENEVA ; CH, vol. 4/15, 9 juillet 2010 (2010-07-09), pages 1-257, XP017596870,**

EP 2 953 269 B1

**Description**

La présente invention concerne une opération de configuration d'interface de transmission de données d'un dispositif noeud dans un réseau de communication implémenté sous forme hiérarchique au dessus d'un réseau d'alimentation électrique, et plus particulièrement une configuration de niveau d'émission desdites données.

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au dessus de réseaux d'alimentation électrique pour la collecte automatisée, auprès de compteurs électriques intelligents (« smart meters » en anglais), de données de relevés de consommation énergétique.

De tels réseaux de communication peuvent avoir une forme d'arbre pour permettre d'étendre la portée des communications. C'est le cas par exemple dans les spécifications PRIME (« PoweRline Intelligent Metering Evolution » en anglais). Les dispositifs d'un tel réseau de communication sont généralement appelés *noeuds.* Un dispositif noeud tient le rôle de racine du réseau de communication et gère le réseau de communication de manière à organiser le partage d'un même support de communication : émission de balises de synchronisation, gestion de topologie,... Des dispositifs noeuds servent alors de relais pour le compte d'autres dispositifs noeuds du réseau de communication lorsque ces derniers n'arrivent pas à recevoir directement des informations du dispositif noeud racine, et à transmettre directement des informations au dispositif noeud racine. On dit alors que le réseau de communication est hiérarchisé. Dans les spécifications PRIME, un dispositif concentrateur de données (« data concentrator » en anglais), parfois appelé *noeud de base* (« base node » en anglais) a le rôle de dispositif noeud racine, et des compteurs électriques, appelés *noeuds commutateurs* (« switch node » en anglais), prennent le rôle de relais entre le dispositif concentrateur de données et d'autres compteurs électriques, appelés *noeuds terminaux* (« terminal node » en anglais). Plusieurs relais peuvent ainsi être nécessaires pour permettre à un dispositif noeud terminal de communiquer avec le dispositif noeud racine. Cette hiérarchie du réseau de communication définit alors une direction ascendante de transmission, à savoir d'un dispositif noeud commutateur ou terminal vers le dispositif concentrateur de données, éventuellement via un ou plusieurs dispositifs noeuds commutateurs. Cette hiérarchie du réseau de communication définit aussi une direction inverse de transmission, qualifiée de *descendante.* Un premier dispositif noeud servant de relais pour le compte d'un second dispositif noeud est qualifié de *parent,* alors que, dans cette relation inter-noeud, le second dispositif noeud est qualifié d'*enfant.* On dit aussi que le second dispositif noeud est rattaché au premier dispositif noeud.

De telles communications par courants porteurs en ligne PLC doivent faire face à des interférences liées à des phénomènes de diaphonie. La diaphonie est un phénomène qui permet à des signaux, typiquement par couplage capacitif, de se propager sans passer par des paires de cuivre proprement dites, mais par des liens parasites non visibles. Les phénomènes de diaphonie sont instables dans le temps, car pouvant varier en fonction de la température ou de l'activité sur le réseau de communication par courants porteurs en ligne PLC. A noter qu'il peut également survenir des phénomènes de diaphonie au sein d'un même appareil, via des liaisons cuivre sur circuits imprimés et/ou via certains composants qui constituent ledit appareil.

Ces phénomènes de diaphonie génèrent des interférences qui peuvent entraîner des pertes de paquets ou messages, notamment de paquets ou messages de signalisation, et ainsi entraîner des déconnexions de dispositifs noeuds du réseau de communication.

Il est alors souhaitable de réduire les interférences liées aux phénomènes de diaphonie pouvant apparaître dans de tels réseaux de communication, de manière à maintenir la connectivité et le caractère opérationnel desdits réseaux de communication.

La présente invention concerne un procédé de configuration d'un dispositif noeud dans un réseau de communication sous forme d'arbre de dispositifs noeuds implémenté sur un réseau d'alimentation électrique dans lequel des phénomènes de diaphonie peuvent apparaître, des dispositifs noeuds pouvant être relais entre un dispositif noeud racine de l'arbre et d'autres dispositifs noeuds qui leur sont respectivement rattachés, chaque transmission dans le réseau de communication en direction du dispositif noeud racine étant ascendante et chaque transmission en direction inverse étant descendante. Le procédé est tel qu'au moins un dispositif noeud effectue les étapes suivantes : obtenir auprès d'un dispositif noeud parent auquel ledit dispositif noeud est rattaché des informations de qualité de réception et de niveau de réception vis-à-vis de signaux émis par ledit dispositif noeud et reçus par ledit dispositif noeud parent ; utiliser, pour transmettre des signaux dans le cadre des transmissions descendantes, un niveau d'émission figé à un niveau d'émission maximum dudit dispositif noeud ; et, ajuster, en fonction desdites informations obtenues, un niveau d'émission dudit dispositif noeud utilisé pour transmettre des signaux dans le cadre de transmissions ascendantes, de sorte à continuer de permettre audit dispositif noeud parent de recevoir lesdits signaux tout en minimisant des interférences liées aux phénomènes de diaphonie. Ainsi, en ajustant le niveau d'émission pour les transmissions ascendantes en fonction des informations de qualité de réception et de niveau de réception obtenues du dispositif noeud parent, les interférences liées aux phénomènes de diaphonie sont réduites, car ledit dispositif noeud peut réaliser les transmissions ascendantes à un niveau d'émission réduit par rapport au niveau d'émission maximum, ce qui génère moins d'interférences au niveau des autres dispositifs noeuds du réseau de communication. De plus, en ajustant le niveau d'émission pour les transmissions ascendantes, des économies d'énergie sont réalisées. De plus, en figeant de la sorte le niveau d'émission pour les transmissions descendantes et en ajustant le niveau d'émission pour les transmissions ascendantes de sorte à permettre audit dispositif noeud parent de recevoir lesdits signaux, la connectivité et le caractère opérationnel du réseau de communication sont maintenus.

Selon un mode de réalisation particulier, ledit dispositif noeud obtient lesdites informations de qualité de réception et de niveau de réception par envoi d'une requête audit dispositif noeud parent, et lesdites informations correspondent à une qualité de réception et/ou un niveau de réception relatifs à ladite requête.

Selon un mode de réalisation particulier, lesdites informations correspondent à une qualité de réception et/ou un niveau de réception relatifs à des signaux transmis par ledit dispositif noeud et reçus par ledit dispositif noeud parent sur une fenêtre glissante prédéfinie.

Selon un mode de réalisation particulier, l'information de qualité de réception est une information de rapport signal-à-bruit.

Selon un mode de réalisation particulier, ledit dispositif noeud détermine le niveau d'émission V à appliquer dans le cadre de transmissions ascendantes de la manière suivante :

$$\begin{cases} V \,=\, N\_Tx\_U - min\,((SNR - SNR\_OK), (RX\_LV - RX\_LV\_OK)) \\ avec, si\ V \,>\, N\_Tx\_Max, V \,=\, N\_Tx\_Max \\ et\ si\ V \,<\, N\_Tx\_Min, V \,=\, N\_Tx\_Min \end{cases}$$

où V est exprimé en décibels-microvolts et où : SNR, exprimé en décibels, est l'information de rapport signal-à-bruit ; RX_LV, exprimé en décibels-microvolts, est l'information de niveau de réception ; N_Tx_U, exprimé en décibels-microvolts, est le niveau d'émission utilisé par ledit dispositif noeud pour émettre les signaux auxquels les informations SNR et RX_LV sont relatives ; SNR_OK, exprimé en décibels, est un seuil de rapport signal-à-bruit en dessous duquel il est considéré que la transmission concernée présente des risques non acceptables d'échec ; RX_LV_OK, exprimé en décibels-microvolts, est un seuil de niveau de réception en dessous duquel il est considéré que la transmission concernée présente des risques non acceptables d'échec ; N_Tx_Max est le niveau d'émission maximum ; et N_Tx_Min est un niveau d'émission minimum pour transmettre des données dans le réseau de communication.

Selon un mode de réalisation particulier, ledit procédé est périodiquement réitéré.

Selon un mode de réalisation particulier, lorsqu'un changement de topologie du réseau de communication entraîne un rattachement dudit dispositif noeud à un autre dispositif noeud parent, ledit procédé est réitéré en initialisant le niveau d'émission dudit dispositif noeud utilisé pour transmettre des signaux dans le cadre des transmissions ascendantes au niveau d'émission maximum.

L'invention concerne également un dispositif noeud destiné à être utilisé dans un réseau de communication sous forme d'arbre de dispositifs noeuds implémenté sur un réseau d'alimentation électrique dans lequel des phénomènes de diaphonie peuvent apparaître, des dispositifs noeuds pouvant être relais entre un dispositif noeud racine de l'arbre et d'autres dispositifs noeuds qui leur sont respectivement rattachés, chaque transmission dans le réseau de communication en direction du dispositif noeud racine étant ascendante et chaque transmission en direction inverse étant descendante. Ledit dispositif noeud est tel qu'il comporte : des moyens pour obtenir auprès d'un dispositif noeud parent auquel ledit dispositif noeud est rattaché des informations de qualité de réception et de niveau de réception vis-à-vis de signaux émis par ledit dispositif noeud et reçus par ledit dispositif noeud parent ; des moyens pour utiliser, pour transmettre des signaux dans le cadre des transmissions descendantes, un niveau d'émission figé à un niveau d'émission maximum dudit dispositif noeud ; et, des moyens pour ajuster, en fonction desdites informations obtenues, un niveau d'émission dudit dispositif noeud utilisé pour transmettre des signaux dans le cadre de transmissions ascendantes, de sorte à continuer de permettre audit dispositif noeud parent de recevoir lesdits signaux tout en minimisant des interférences liées aux phénomènes de diaphonie.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau de communication sous forme d'arbre implémenté sur un réseau d'alimentation électrique, dans lequel des phénomènes de diaphonie peuvent apparaitre, et dans lequel l'invention peut être mise en oeuvre ;

- la Fig. 2 illustre schématiquement un exemple d'architecture matérielle d'un dispositif noeud du réseau de communication ;
- la Fig. 3 illustre schématiquement un algorithme, mis en oeuvre par un dispositif noeud du réseau de communication, de configuration d'une interface de transmission de données dudit dispositif noeud ;
- la Fig. 4 illustre schématiquement un format de paquet émis dans le réseau de communication ;
- la Fig. 5 illustre schématiquement un algorithme, mis en oeuvre par un dispositif noeud du réseau de communication, de transmission de données dans le réseau de communication ;
- la Fig. 6 illustre schématiquement un algorithme, mis en oeuvre par un dispositif noeud du réseau de communication, de traitement d'un message de requête d'informations de qualité de réception et de niveau de réception ; et
- la Fig. 7 illustre schématiquement un algorithme, mis en oeuvre par un dispositif noeud du réseau de communication, de traitement d'un message de réponse incluant des informations de qualité de réception et de niveau de réception.

La description qui suit détaille la présente invention dans le cadre d'un réseau de communication en arbre qui est implémenté sur un réseau d'alimentation électrique, afin de mettre en oeuvre des services de type AMM, et qui est plus particulièrement conforme aux spécifications PRIME (à l'exception d'échanges de messages incluant des informations de qualité de réception de signal et de niveau de réception de signal (« Received Signal Strength » en anglais), et d'opérations de traitement desdites informations, qui sont introduits par la présente invention). Il convient toutefois de noter que la présente invention s'applique à tout réseau de communication en arbre (donc hiérarchisé) dans lequel des phénomènes de diaphonie peuvent apparaître.

Afin de réduire les interférences liées aux phénomènes de diaphonie de manière à maintenir la connectivité et le caractère opérationnel du réseau de communication, il est proposé que chaque dispositif noeud (autre que le dispositif noeud racine) du réseau de communication obtienne, par échanges de messages avec le dispositif noeud parent auquel ledit dispositif noeud est rattaché dans l'arbre formé par ledit réseau de communication, des informations de qualité de réception (e.g. rapport signal-à-bruit SNR (« Signal-to-Noise Ratio » en anglais)) et de niveau de réception RX_LV vis-à-vis de signaux émis par ledit dispositif noeud et reçus par ledit dispositif noeud parent. Il est ensuite proposé que ledit dispositif noeud ajuste le niveau d'émission (« Transmit Signal Strength » en anglais) de signaux ultérieurement transmis par ledit dispositif noeud dans le sens ascendant en fonction desdites informations de qualité de réception et de niveau de réception RX_LV, de sorte à permettre audit dispositif noeud parent de recevoir lesdits signaux tout en minimisant les interférences liées aux phénomènes de diaphonie, et de maintenir le niveau d'émission à une valeur maximum pour des signaux transmis par ledit dispositif noeud dans le sens descendant (le cas échéant). En maintenant le niveau d'émission à une valeur maximum dans le sens descendant, les opérations de synchronisation par signaux de balise sont permises au maximum de portée dudit dispositif noeud (qui est alors un dispositif noeud commutateur), et, en ajustant le niveau d'émission dans le sens ascendant, les interférences liées aux phénomènes de diaphonie sont réduites.

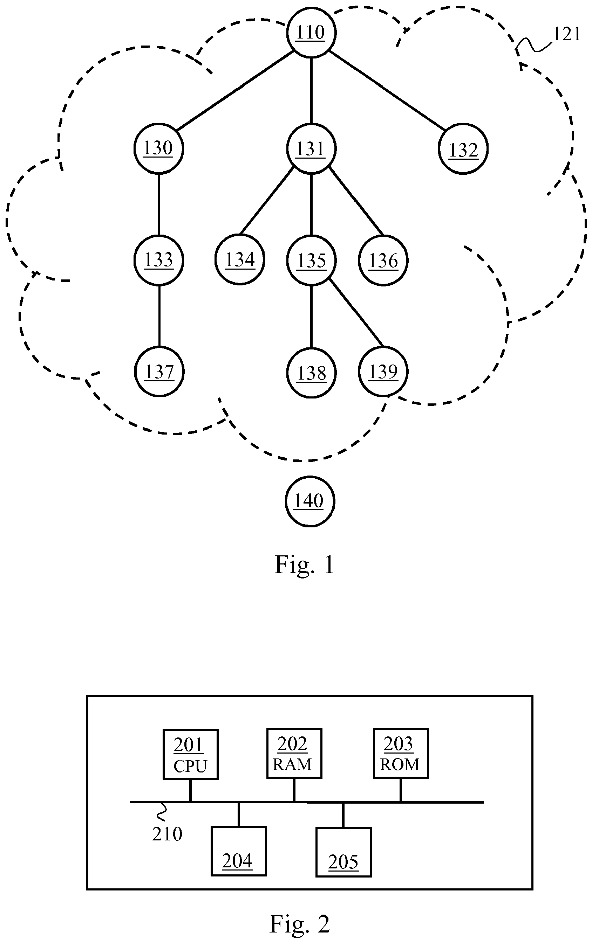

La Fig. 1 illustre schématiquement un réseau de communication 121 implémenté sous forme d'arbre sur un réseau d'alimentation électrique, dans lequel des phénomènes de diaphonie peuvent apparaître et dans lequel l'invention peut être mise en oeuvre.

Le réseau de communication 121 est en forme d'arbre dont un dispositif noeud particulier 110, appelé *dispositif concentrateur*, est la racine. Le réseau de communication 121 est ainsi hiérarchisé et est destiné à permettre de connecter une pluralité de dispositifs noeuds au dispositif concentrateur 110. Dans le cadre de la Fig. 1, les dispositifs noeuds que le réseau de communication 121 vise à connecter au dispositif concentrateur 110 sont des compteurs électriques intelligents. Le réseau de communication 121 permet ainsi d'établir des communications à courants porteurs en ligne PLC.

Etant donnée la portée des communications à courants porteurs en ligne PLC, des dispositifs noeuds commutateurs jouent le rôle de relais entre des dispositifs noeuds terminaux (qui ne jouent pas le rôle de relais) et le dispositif concentrateur 110. Certaines communications entre des dispositifs noeuds terminaux et le dispositif concentrateur 110 peuvent nécessiter plusieurs relais successifs. Cela définit donc des rattachements de dispositifs noeuds les uns aux autres pour former l'arbre constituant le réseau de communication 121. Un dispositif noeud qui n'est pas rattaché au réseau de communication 121 est un dispositif déconnecté (« disconnected » en anglais).

Cette situation est présentée sur la Fig. 1. Un dispositif noeud terminal 132 est directement rattaché au dispositif concentrateur 110. Deux autres dispositifs noeuds 130 et 131 sont aussi directement rattachés au dispositif concentrateur 110. Ces deux dispositifs noeuds 130 et 131 jouent le rôle de relais entre le dispositif concentrateur 110 et d'autres dispositifs noeuds. Le dispositif noeud 130 joue le rôle de relais entre le dispositif concentrateur 110 et un dispositif noeud 133 qui, lui-même, joue le rôle de relais entre le dispositif noeud 130 et un dispositif noeud terminal 137. Les communications entre le dispositif concentrateur 110 et le dispositif noeud terminal 137 passent donc par deux relais successifs, à savoir les dispositifs noeuds relais 130 et 133. Le dispositif noeud 131 joue le rôle de relais entre le dispositif concentrateur 110 et trois autres dispositifs noeuds 134, 135 et 136. Les dispositifs noeuds 134 et 136 sont des dispositifs noeuds terminaux, et le dispositif noeud 135 joue le rôle de relais entre le dispositif noeud 131 et deux dispositifs noeuds terminaux 138 et 139.

La Fig. 1 montre aussi un dispositif noeud 140, qui est un dispositif déconnecté.

Il faut comprendre que la topologie du réseau de communication 121 n'est pas figée. La Fig. 1 représente la topologie du réseau de communication 121 à un instant donné. A cause notamment des phénomènes de diaphonie et autres interférences, des dispositifs noeuds peuvent se trouver déconnectés du réseau de communication 121 et cherchent alors à se reconnecter au réseau de communication 121. La topologie du réseau de communication 121 après reconnexion est alors probablement différente de la topologie du réseau de communication 121 avant déconnexion. La présente invention vise à stabiliser la topologie du réseau de communication 121 en limitant les interférences liées aux phénomènes de diaphonie.

Les communications dans le réseau de communication 121 s'effectuent préférentiellement sous la forme de trames décomposées en trois parties.

Une première partie de chaque trame est dédiée à l'émission périodique de balises (« beacons » en anglais). Ces balises contiennent des informations servant, entre autre, à la découverte et à la synchronisation du réseau de communication 121. Plusieurs intervalles de temps (« time slots » en anglais) sont définis dans ladite première partie de chaque trame : un intervalle de temps est dédié à l'émission de balises par le dispositif concentrateur 110, et les autres intervalles de temps sont dédiés à l'émission périodique de balises par les dispositifs noeuds commutateurs, afin de permettre aux dispositifs noeuds respectivement rattachés auxdits dispositifs noeuds commutateurs de se synchroniser. Le dispositif concentrateur 110 est en charge d'attribuer un intervalle de temps de ladite première partie de chaque trame (ainsi qu'une fréquence d'émission) à chaque dispositif noeud commutateur.

Une seconde partie de chaque trame est dédiée aux communications par tous les dispositifs noeuds du réseau de communication. Un mécanisme de type CSMA/CA (« Carrier Sense Multiple Access / Collision Avoidance » en anglais) est mis en oeuvre, sans option RTS/CTS (« Request-To-Send / Clear-To-Send » en anglais). Lorsqu'un dispositif noeud doit envoyer un paquet ou un message, ledit dispositif noeud détecte l'état d'occupation du support de communication (*i.e.* canal de transmission) et décide ou non d'envoyer le paquet ou le message en conséquence. Un délai aléatoire à appliquer indépendamment, depuis le début de ladite seconde partie de trame, par chaque dispositif noeud désireux d'émettre, permet de limiter le risque de collision.

Une troisième partie de chaque trame est dédiée aux communications par des dispositifs noeuds spécifiques du réseau de communication 121. On retrouve une telle troisième partie de trame dans les spécifications PRIME sous l'acronyme CFP (« Contention-Free Period » en anglais).

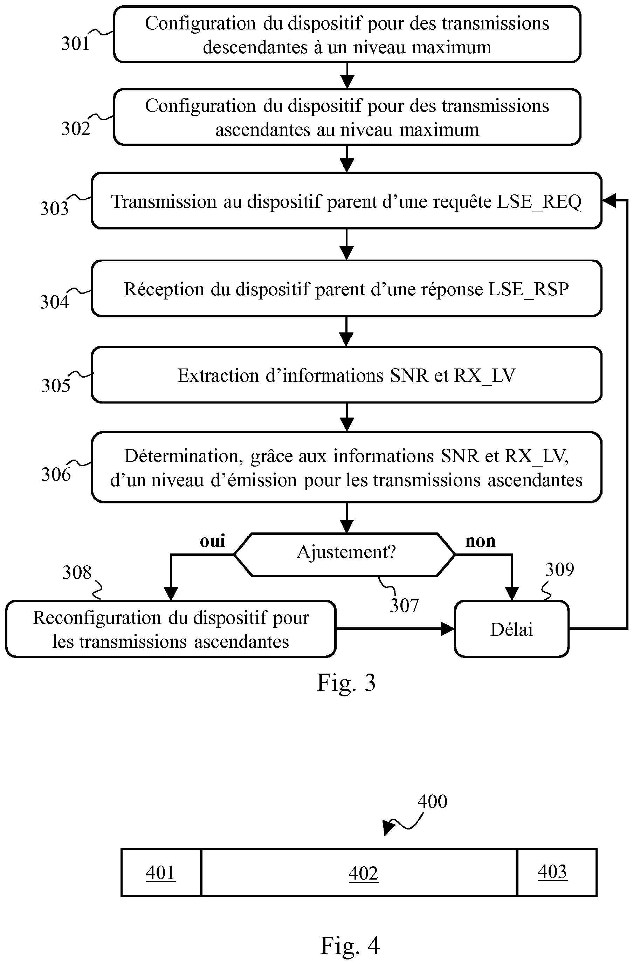

Les messages auxquels il est fait référence dans la suite du document sont ainsi échangés sous forme de paquets dans la seconde partie de trame, par application du mécanisme de type CSMA/CA. Ces messages reposent préférentiellement sur un format de paquet, compatible avec les spécifications PRIME et décrit ci-après en relation avec la Fig. 4.

La Fig. 2 illustre schématiquement un exemple d'architecture matérielle d'un dispositif noeud du réseau de communication 121, que ce soit le dispositif concentrateur 110, un dispositif noeud commutateur ou un dispositif noeud terminal.

Considérons à titre illustratif que la Fig. 2 représente schématiquement l'architecture du dispositif noeud commutateur 131. Le dispositif noeud commutateur 131 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface d'émission-réception (« transceiver interface » en anglais) 205 de signaux courants porteurs en ligne PLC, permettant au dispositif noeud commutateur 131 de communiquer au sein du réseau de communication 121.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif noeud commutateur 131 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un processeur, un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, mis en oeuvre par un dispositif noeud du réseau de communication 121, de configuration d'une interface de transmission de données dudit dispositif noeud.

Dans une étape 301, le dispositif noeud définit une configuration dudit dispositif noeud pour les transmissions descendantes, de sorte à utiliser un niveau maximum N_Tx_Max d'émission pour lesdites transmissions descendantes. Notons N_Tx_D le niveau d'émission pour les transmissions descendantes. Une telle configuration pour les transmissions descendantes n'est pas destinée à être ajustée dans le temps, de manière à notamment émettre les signaux de balise au maximum de portée dudit dispositif noeud lorsque ledit dispositif noeud est un dispositif noeud commutateur agissant comme relais au sein du réseau de communication.

Ainsi, N_Tx_D = N_Tx_Max, de manière permanente. Par exemple, N_Tx_Max est fixé à 125 dBµV (decibel-microvolts).

Dans une étape 302, le dispositif noeud définit une configuration dudit dispositif noeud pour les transmissions ascendantes, de sorte à utiliser le niveau maximum N_Tx_Max d'émission pour lesdites transmissions ascendantes. Notons N_Tx_U le niveau d'émission pour les transmissions ascendantes. Une telle configuration pour les transmissions ascendantes est, par contre, destinée à être ajustée dans le temps, de manière à limiter les interférences liées aux phénomènes de diaphonie dans le réseau de communication 121.

Ainsi, N_Tx_U = N_Tx_Max, en phase d'initialisation.

Dans une étape 303 suivante, le dispositif noeud transmet, au dispositif noeud parent auquel ledit dispositif noeud est rattaché dans l'arbre formé par ledit réseau de communication 121, une requête LSE_REQ. La requête LSE_REQ est représentative d'une demande d'obtention d'informations de qualité de réception et de niveau de réception RX_LV vis-à-vis de signaux émis par ledit dispositif noeud et reçus par ledit dispositif noeud parent. La requête LSE_REQ suit préférentiellement le format de paquet conforme aux spécifications PRIME, tel que décrit ci-après en relation avec la Fig. 4.

Dans une étape 304 suivante, le dispositif noeud reçoit, en provenance dudit dispositif noeud parent, une réponse LSE_RSP à la requête LSE_REQ transmise à l'étape 303. La réponse LSE_RSP inclut les informations de qualité de réception et de niveau de réception RX_LV demandées par ledit dispositif noeud par le biais de la requête LSE_REQ. La réponse LSE_RSP suit préférentiellement le format de paquet conforme aux spécifications PRIME, tel que décrit ci-après en relation avec la Fig. 4. Grâce aux messages LSE_REQ et LSE_RSP échangés dans les étapes 303 et 304, le dispositif noeud obtient lesdites informations de qualité de réception et de niveau de réception RX_LV demandées.

Dans une étape 305 suivante, le dispositif noeud extrait, de la réponse LSE_RSP, les informations de qualité de réception et de niveau de réception RX_LV transmises par ledit dispositif noeud parent.

Dans une étape 306 suivante, le dispositif noeud détermine, à partir des informations de qualité de réception (*e.g.* de rapport signal-à-bruit SNR) et de niveau de réception RX_LV extraites, une valeur V de niveau d'émission de signaux à appliquer dans le cadre des transmissions ascendantes, de manière à permettre audit dispositif noeud parent de recevoir lesdits signaux tout en minimisant des interférences liées aux phénomènes de diaphonie. En considérant que l'information de qualité de réception est une information de rapport signal-à-bruit SNR, la valeur V est exprimée en dBµV (décibels-microvolts) de la manière suivante :

$$\begin{cases} V \ = \ \text{N\_Tx\_U} - min\left((\text{SNR} - \text{SNR\_OK}), (\text{RX\_LV} - \text{RX\_LV\_OK})\right) \\ \quad avec, si\ V \ > \ \text{N\_Tx\_Max}, V \ = \ \text{N\_Tx\_Max} \\ \quad et\ si\ V \ < \ \text{N\_Tx\_Min}, V \ = \ \text{N\_Tx\_Min} \end{cases}$$

où :

- SNR_OK, exprimé en dB (décibels), est un seuil de rapport signal-à-bruit en dessous duquel il est considéré que la transmission concernée présente des risques non acceptables d'échec ;
- RX_LV_OK, exprimé en dBµV (décibels-microvolts), est un seuil de niveau de réception en dessous duquel il est considéré que la transmission concernée présente des risques non acceptables d'échec ; et
- N_Tx_Min, exprimé en dBµV (décibels-microvolts), est un niveau d'émission minimum pour transmettre des données dans le réseau de communication 121.

On note donc que la détermination de la valeur V comprend :

- une détermination d'une première différence entre ladite information de rapport signal-à-bruit SNR et le rapport signal à bruit minimum SNR_OK ;
- une détermination d'une seconde différence entre ladite information de niveau de réception RX_LV et le niveau réception minimum RX_LV_OK ;
- une détermination d'une différence minimale entre la première et la seconde différence ;
- un calcul du niveau d'émission V en soustrayant ladite différence minimale au niveau émission N_Tx_U utilisé par ledit dispositif noeud pour émettre les signaux auxquels l'information de qualité de réception (i.e. l'information de rapport signal-à-bruit SNR) et l'information de niveau de réception RX_LV se rapportent ; et,
- un remplacement du niveau d'émission V par le niveau d'émission maximum N_Tx_Max si V est supérieur au niveau d'émission maximum, et par le niveau d'émission minimum N_Tx_Min si V est inférieur au niveau d'émission minimum.

Par exemple, SNR_OK est fixé à 10 dB (décibels), RX_LV_OK est fixé à 75 dBμV (décibels-microvolts) et N_Tx_Min est fixé à 50 dBμV (décibels-microvolts).

L'expression de la valeur V ci-dessus permet de déterminer un niveau d'émission pour les transmissions ascendantes visant à permettre que la qualité de réception de signaux émis par ledit dispositif noeud à l'attention dudit dispositif noeud parent soit supérieure à un premier seuil prédéfini (SNR_OK dans l'expression de la valeur V ci-dessus) et que le niveau de réception desdits signaux soit supérieur à un second seuil prédéfini (RX_LV_OK dans l'expression de la valeur V ci-dessus), de sorte à continuer de permettre audit dispositif noeud parent de recevoir des signaux en provenance dudit dispositif noeud tout en limitant les interférences liées aux phénomènes de diaphonie.

En fixant une valeur minimale au niveau d'émission V, ici égal à N_Tx_Min, on assure des transmissions correctes ce qui minimise les phénomènes de diaphonie sur le réseau.

De plus, en donnant une valeur minimale au niveau d'émission V, on évite des dégradations par un bruit de communication.

De même, en limitant le niveau d'émission V à une valeur maximale N_Tx_Max, on évite des phénomènes de saturation.

On remarque par ailleurs que le calcul de la valeur V de niveau d'émission est basé sur deux critères différents : une information de qualité de réception sous forme d'un rapport signal-à-bruit SNR, et une information de niveau de réception RX_LV. Il est important de prendre en compte ces deux critères car ils sont interdépendants. Par exemple, si on ne considérait que l'information de qualité de réception pour ajuster le niveau d'émission, une valeur élevée du rapport signal-à-bruit SNR provoquerait une baisse du niveau d'émission V, ce qui pourrait aboutir à une baisse du niveau de réception RX_LV jusqu'à une valeur inacceptable. Dans un autre exemple, si on ne considérait que l'information de niveau de réception RX_LV pour ajuster le niveau d'émission, une valeur élevée du niveau de réception RX_LV provoquerait une baisse du niveau d'émission V, ce qui pourrait aboutir à une baisse de la qualité de réception jusqu'à une valeur inacceptable. Dans une étape 307 suivante, le dispositif noeud vérifie si un ajustement du niveau d'émission pour les transmissions ascendantes est souhaitable, e.g. lorsque la valeur V est différente du niveau d'émission N_Tx_U utilisé pour effectuer les transmissions auxquelles sont relatives les informations de qualité de réception (*e.g.* de rapport signal-à-bruit SNR) et de niveau de réception RX_LV extraites. Si un ajustement du niveau d'émission pour les transmissions ascendantes est souhaitable, une étape 308 est effectuée ; sinon, une étape 309 est effectuée.

Dans l'étape 308, le dispositif noeud définit une configuration ajustée dudit dispositif noeud pour les transmissions ascendantes, de sorte à utiliser le niveau d'émission défini pour la valeur V déterminée à l'étape 306. La valeur V peut correspondre à une baisse ou à une augmentation du niveau d'émission pour les transmissions ascendantes. La configuration du dispositif noeud pour les transmissions descendantes demeure inchangée. Ensuite, l'étape 309 est effectuée.

Dans l'étape 309, le dispositif noeud applique un délai prédéterminé, avant de réitérer l'étape 303. Il en découle que, selon l'algorithme de la Fig. 3, le dispositif noeud vérifie périodiquement la pertinence de la configuration dudit dispositif noeud pour les transmissions ascendantes. De manière alternative, il est possible de déclencher sur demande une réitération de l'algorithme de la Fig. 3 à partir de l'étape 303. La valeur du délai appliqué à l'étape 309 peut en outre être dynamiquement modifiée, par exemple en fonction d'une rapidité d'évolution de la qualité de réception et/ou du niveau de réception RX_LV indiqués par le dispositif noeud parent au fil desdites réitérations de l'algorithme de la Fig. 3. L'application du délai à l'étape 309 est préférentiellement débrayable

Lorsque la topologie du réseau de communication 121 change de sorte que le dispositif noeud n'est plus rattaché au même dispositif noeud parent, l'algorithme de la Fig. 3 est préférentiellement réitéré depuis le début avec le nouveau dispositif noeud parent dudit dispositif noeud. La phase d'initialisation est donc ainsi réitérée, le dispositif noeud se configurant alors de sorte à utiliser le niveau maximum N_Tx_Max d'émission pour les transmissions ascendantes.

La Fig. 4 illustre schématiquement un format de paquet 400 émis dans le réseau de communication 121, lorsque les transmissions dans le réseau de communication 121 sont conformes aux spécifications PRIME. Comme déjà indiqué, de tels paquets sont transmis selon un mécanisme CSMA/CA, sans option RTS/CTS.

Le paquet 400 comporte un préambule 401, un entête 402 et des données utiles (« payload data » en anglais) 403.

Le préambule 401 est utilisé pour des besoins de synchronisation.

L'entête 402 comporte un champ, dénommé PKT.CTYPE dans les spécifications PRIME, indiquant le type du paquet 400. Les spécifications PRIME définissent actuellement dix types de paquets respectivement représentés par les valeurs 1 à 10 (en décimal). Un nouveau type de paquet, LSE, peut ainsi être défini, le type LSE recouvrant les requêtes LSE_REQ et les réponses LSE_RSP. La distinction entre requêtes LSE_REQ et réponses LSE_RSP peut alors être faite grâce à un bit dédié dans les données utiles 403 (bit à « 0 » dans le cas d'une requêtes LSE_REQ et bit à « 1 » dans le cas d'une réponse LSE_RSP).

L'entête 402 comporte en outre des champs, dénommés PKT.LNID et PKT.SID selon les spécifications PRIME, permettant d'indiquer, dans le cadre d'une transmission ascendante, un identifiant du dispositif noeud à l'origine du paquet 400 ; les champs PKT.LNID et PKT.SID permettent d'indiquer, dans le cadre d'une transmission descendante, un identifiant du dispositif noeud destinataire du paquet 400. Un dispositif noeud commutateur est alors en mesure de déterminer grâce aux champs PKT.LNID et PKT.SID, et par connaissance de la topologie du réseau de communication 121, si une requête LSE_REQ est issue d'un dispositif noeud enfant dudit dispositif noeud commutateur, et donc si la requête LSE_REQ est à traiter par ledit dispositif noeud commutateur. Un dispositif noeud est alors aussi en mesure de déterminer grâce aux champs PKT.LNID et PKT.SID, et par connaissance de la topologie du réseau de communication 121, si une réponse LSE_RSP est issue du dispositif noeud parent dudit dispositif noeud, et donc si la réponse LSE_RSP est à traiter par ledit dispositif noeud.

Lorsque le paquet 400 est une requête LSE_REQ ou une réponse LSE_RSP, les données utiles 403 contiennent en outre un champ, dénommé LSE.SNR, fournissant une information de qualité de réception de type rapport signal-à-bruit SNR. Par exemple, le champ LSE.SNR est encodé sur quatre bits et permet de fournir une indication de rapport signal-à-bruit SNR allant de 0 dB (décibel) à 15 dB (décibels), la valeur 15 dB (décibels) étant aussi utilisée pour des rapports signal-à-bruit supérieurs à 15 dB (décibels) et la valeur 0 dB (décibels) étant aussi utilisée pour des rapports signal-à-bruit inférieurs à 0 dB (décibels).

Lorsque le paquet 400 est une requête LSE_REQ ou une réponse LSE_RSP, les données utiles 403 contiennent en outre un champ, dénommé LSE.RX_LV, fournissant une information de niveau de réception RX_LV. Par exemple, le champ LSE.RX_LV est encodé sur huit bits et permet de fournir une indication de niveau de réception RX_LV allant de 0 dBμV (décibels-microvolts) à 255 dBμV (décibels-microvolts), la valeur 255 dBμV (décibels-microvolts) étant aussi utilisée pour des niveaux de réception RX_LV supérieurs à 255 dBμV (décibels-microvolts), et la valeur 0 dBμV (décibels-microvolts) étant aussi utilisée pour des niveaux de réception RX_LV inférieurs à 0 dBμV (décibels-microvolts).

Lorsque le paquet 400 est une requête LSE_REQ ou une réponse LSE_RSP, les données utiles 403 contiennent en outre préférentiellement un champ, dénommé LSE.EUI48, fournissant une information représentative d'un identifiant unique du dispositif noeud ayant transmis la requête LSE_REQ que représente le paquet 400 ou en réponse de laquelle la réponse LSE_RSP que représente le paquet 400 a été générée.

Lorsque le paquet 400 est une requête LSE_REQ ou une réponse LSE_RSP, les données utiles 403 peuvent contenir un champ, dénommé LSE.SNR_TYPE, fournissant une information indiquant un type d'information de rapport signal-à-bruit qui est à indiquer ou respectivement indiquée dans le champ LSE.SNR, lorsque plusieurs types d'information de rapport signal-à-bruit sont possibles. Par exemple, un premier type est une mesure de rapport signal-à-bruit effectuée sur la requête LSE_REQ en réponse de laquelle la réponse LSE_RSP que représente le paquet 400 a été générée ; un second type est une moyenne de mesures de rapport signal-à-bruit effectuées sur une fenêtre glissante vis-à-vis de signaux reçus du dispositif noeud ayant généré la requête LSE_REQ en réponse de laquelle la réponse LSE_RSP que représente le paquet 400 a été générée.

Lorsque le paquet 400 est une requête LSE_REQ ou une réponse LSE_RSP, les données utiles 403 peuvent contenir un champ, dénommé LSE.RX_LV_TYPE, fournissant une information indiquant un type d'information de niveau de réception qui est à indiquer ou respectivement indiquée dans le champ LSE.RX_LV, lorsque plusieurs types d'information de niveau de réception sont possibles. Par exemple, un premier type est une mesure de niveau de réception effectuée sur la requête LSE_REQ en réponse de laquelle la réponse LSE_RSP que représente le paquet 400 a été générée ; un second type est une moyenne de mesures de niveau de réception effectuées sur une fenêtre glissante vis-à-vis de signaux reçus du dispositif noeud ayant généré la requête LSE_REQ en réponse de laquelle la réponse LSE_RSP que représente le paquet 400 a été générée. Dans un mode de réalisation particulier, les champs LSE.SNR_TYPE et LSE.RX_LV_TYPE peuvent être fusionnés en un unique champ LSE.DATA_TYPE, les sélections de type d'information de rapport signal-à-bruit et de type d'information de niveau de réception s'effectuant alors conjointement, e.g. mesure sur réception de la requête LSE_REQ ou moyenne de mesures sur une fenêtre glissante.

Dans un mode de réalisation particulier, lorsque le paquet 400 est une requête LSE_REQ, les données utiles 403 peuvent contenir un champ, dénommé LSE.REQ_DATA, fournissant une information indiquant si ladite requête LSE_REQ contient en outre des informations complémentaires de qualité de réception et de niveau de réception que le dispositif noeud ayant généré la requête LSE_REQ souhaite fournir au dispositif noeud parent (*i.e.* auquel ladite requête LSE_REQ est adressée). Ces informations complémentaires de qualité de réception et de niveau de réception sont représentatives d'une qualité de réception et d'un niveau de réception de signaux qui ont été émis par le dispositif noeud auquel ladite requête LSE_REQ est adressée et qui ont été reçus par le dispositif noeud ayant généré ladite requête LSE_REQ. Cela suppose que lesdites informations complémentaires de qualité de réception et de niveau de réception sont relatives à des signaux transmis avant la transmission de ladite requête LSE_REQ. Les champs LSE.SNR et LSE.RX_LV contiennent alors respectivement lesdites informations complémentaires de qualité de réception et de niveau de réception.

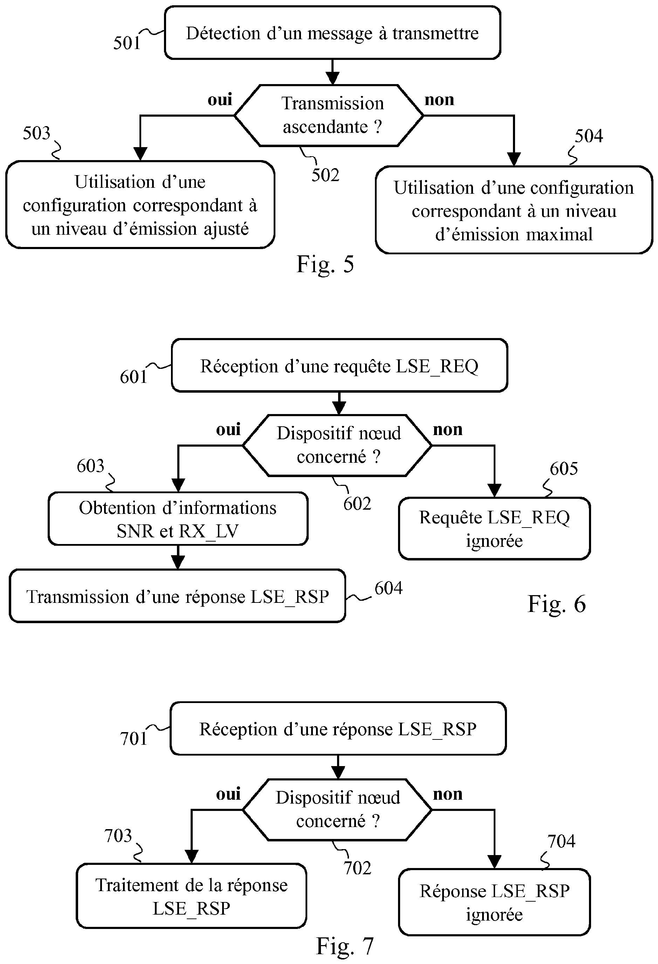

La Fig. 5 illustre schématiquement un algorithme, mis en oeuvre par un dispositif noeud du réseau de communication 121, de transmission de données dans le réseau de communication 121.

Dans une étape 501, le dispositif noeud détecte que ledit dispositif noeud a un message à transmettre dans le réseau de communication 121.

Dans une étape 502 suivante, le dispositif noeud détermine si le message est relatif à une transmission ascendante ou à une transmission descendante. Si ledit message est relatif à une transmission ascendante, une étape 503 est effectuée ; sinon, une étape 504 est effectuée.

Dans l'étape 503, le dispositif noeud effectue la transmission dudit message en utilisant la configuration pour les transmissions ascendantes, résultant de l'application de l'algorithme de la Fig. 3. En d'autres termes, le dispositif noeud utilise une configuration qui peut avoir été ajustée depuis la phase d'initialisation.

Dans l'étape 504, le dispositif noeud effectue la transmission dudit message en utilisant la configuration pour les transmissions descendantes, inchangée depuis la phase d'initialisation.

La Fig. 6 illustre schématiquement un algorithme, mis en oeuvre par un dispositif noeud du réseau de communication 121, de traitement d'un message de requête d'informations de qualité de réception et de niveau de réception.

Dans une étape 601, le dispositif noeud reçoit une requête LSE_REQ. Dans une étape 602 suivante, le dispositif noeud vérifie si ledit dispositif noeud est concerné par la requête LSE_REQ reçue. En d'autres termes, le dispositif noeud vérifie si ladite requête LSE_REQ est issue d'un dispositif noeud enfant dudit dispositif noeud. Si le dispositif noeud est concerné par la requête LSE_REQ reçue, une étape 603 est effectuée ; sinon, une étape 605 est effectuée.

Dans l'étape 603, le dispositif noeud obtient des informations de qualité de réception et de niveau de réception RX_LV vis-à-vis de signaux émis par le dispositif noeud dont est issue la requête LSE_REQ reçue et reçus par ledit dispositif noeud exécutant l'algorithme de la Fig. 6. Dans un premier mode de réalisation, lesdites informations sont des informations de qualité de réception (e.g. rapport signal-à-bruit SNR) et/ou de niveau de réception RX_LV relatifs à la requête LSE_REQ reçue à l'étape 601. Dans un second mode de réalisation, lesdites informations sont des informations de qualité de réception (e.g. rapport signal-à-bruit SNR) moyenne et/ou de niveau de réception RX_LV moyen relatifs à des signaux émis par le dispositif noeud dont est issue la requête LSE_REQ reçue et reçus, sur une fenêtre glissante prédéfinie, par le dispositif noeud exécutant l'algorithme de la Fig. 6.

Dans une étape 604 suivante, le dispositif noeud construit une réponse LSE_RSP incluant les informations de qualité de réception et de niveau de réception RX_LV obtenues à l'étape 603. Puis, le dispositif noeud transmet la réponse LSE_RSP construite, en réponse à la requête LSE_REQ reçue à l'étape 601. La réponse LSE_RSP est ainsi transmise à destination du dispositif noeud dont est issue la requête LSE_REQ reçue à l'étape 601. Il est ensuite mis fin à l'algorithme de la Fig. 6.

Dans l'étape 605, le dispositif noeud ignore la requête LSE_REQ reçue à l'étape 601, puis il est mis fin à l'algorithme de la Fig. 6.

Il convient de noter que, dans aucune des opérations effectuées dans les étapes 604 et 605, la requête LSE_REQ reçue à l'étape 601 n'est relayée par le dispositif noeud. Cela permet de limiter l'impact des transmissions de requêtes LSE_REQ sur la charge du réseau de communication 121. De plus, il n'y a pas d'intérêt à ce que les requêtes LSE_REQ soient relayées, puisque les requêtes LSE_REQ visent à obtenir de la part du dispositif noeud parent des informations de qualité et de niveau de réception de signal, ce qui suppose un rattachement entre le dispositif noeud enfant et le dispositif noeud parent concernés qui soit opérationnel.

La Fig. 7 illustre schématiquement un algorithme, mis en oeuvre par un dispositif noeud du réseau de communication 121, de traitement d'un message de réponse incluant des informations de qualité de réception et de niveau de réception.

Dans une étape 701, le dispositif noeud reçoit une réponse LSE_RSP. Dans une étape 702 suivante, le dispositif noeud vérifie si ledit dispositif noeud est concerné par la réponse LSE_RSP reçue. En d'autres termes, le dispositif noeud vérifie si ladite réponse LSE_RSP est en réponse à une requête LSE_REQ précédemment transmise par ledit dispositif noeud. Si le dispositif noeud est concerné par la réponse LSE_RSP reçue, une étape 703 est effectuée ; sinon, une étape 704 est effectuée. Dans l'étape 703, le dispositif noeud traite la réponse LSE_RSP reçue à l'étape 701, comme déjà détaillé en relation avec la Fig. 3. Il est ensuite mis fin à l'algorithme de la Fig. 7. Dans l'étape 704, le dispositif noeud ignore la réponse LSE_RSP reçue à l'étape 701, puis il est mis fin à l'algorithme de la Fig. 7.

Il convient de noter que, dans aucune des opérations effectuées dans les étapes 703 et 704, la réponse LSE_RSP reçue à l'étape 701 n'est relayée par le dispositif noeud. Cela permet de limiter l'impact des transmissions de réponses LSE_RSP sur la charge du réseau de communication 121. De plus, il n'y a pas d'intérêt à ce que les réponses LSE_RSP soient relayées, puisque les réponses LSE_RSP visent à fournir à un dispositif noeud enfant des informations de qualité et de niveau de réception de signal reçu, ce qui suppose un rattachement entre le dispositif noeud enfant et le dispositif noeud parent concernés qui soit opérationnel.

Il est possible que le réseau de communication 121 comporte des dispositifs noeuds conformes aux spécifications PRIME et n'ayant pas connaissance des mécanismes relatifs aux requêtes LSE_REQ et aux réponses LSE_RSP, et que ces dispositifs noeuds relaient lesdites requêtes LSE_REQ et lesdites réponses LSE_RSP. De manière à ne pas surcharger le réseau de communication 121, les mécanismes relatifs aux requêtes LSE_REQ et aux réponses LSE_RSP peuvent alors être débrayable et les dispositifs noeuds concernés utilisent alors le niveau d'émission maximum N_Tx_Max pour réaliser les transmissions ascendantes.

**Revendications**

1. Procédé de configuration d'un dispositif noeud dans un réseau de communication (121) sous forme d'arbre de dispositifs noeuds implémenté sur un réseau d'alimentation électrique, des dispositifs noeuds pouvant être relais (130 ; 131 ; 133 ; 135) entre un dispositif noeud racine de l'arbre et d'autres dispositifs noeuds (134 ; 136; 137 ; 138; 139) qui leur sont respectivement rattachés, chaque transmission dans le réseau de communication en direction du dispositif noeud racine étant ascendante et chaque transmission en direction inverse étant descendante, **caractérisé en ce qu'**au moins un dispositif noeud effectue les étapes suivantes :

   - obtenir (303, 304), auprès d'un dispositif noeud parent auquel ledit dispositif noeud est rattaché, des informations de qualité de réception et de niveau de réception vis-à-vis de signaux, lesdits signaux ayant été émis par ledit dispositif noeud et reçus par ledit dispositif noeud parent, l'information de qualité de réception étant une information de rapport signal-à-bruit (SNR) ;
   - utiliser, pour transmettre (504) des signaux dans le cadre des transmissions descendantes, un niveau d'émission figé à un niveau d'émission maximum dudit dispositif noeud ; et
   - déterminer (306, 308), un niveau d'émission V dudit dispositif noeud utilisé pour transmettre (503) des signaux dans le cadre des transmissions ascendantes, de sorte à continuer de permettre audit dispositif noeud parent de recevoir lesdits signaux tout en minimisant des interférences liées à des phénomènes de diaphonie, ledit niveau d'émission V étant déterminé en mettant en oeuvre les étapes suivantes :

      - déterminer une première différence entre ladite information de rapport signal-à-bruit (SNR) et un rapport signal à bruit minimum prédéfini (SNR_OK) ;
      - déterminer une seconde différence entre ladite information de niveau de réception (RX_LV) et un niveau réception minimum prédéfini (RX_LV_OK) ;
      - déterminer une différence minimale entre la première et la seconde différence ;
      - calculer le niveau d'émission V en soustrayant ladite différence minimale à un niveau d'émission (N_Tx_U) utilisé par ledit dispositif noeud pour émettre les signaux auxquels l'information de qualité de réception et l'information de niveau de réception se rapportent ;
      - remplacer le niveau d'émission V par le niveau d'émission maximum (N_Tx_Max) si V est supérieur au niveau d'émission maximum, et par un niveau d'émission minimum prédéfini (N_Tx_Min) si V est inférieur au niveau d'émission minimum prédéfini.

2. Procédé selon la revendication 1, **caractérisé en ce que** ledit dispositif noeud obtient lesdites informations de qualité de réception et de niveau de réception par envoi (303) d'une requête audit dispositif noeud parent, et **en ce que** lesdites informations correspondent à une qualité de réception et/ou un niveau de réception relatifs à ladite requête.

3. Procédé selon la revendication 1, **caractérisé en ce que** lesdites informations correspondent à une qualité de réception et/ou un niveau de réception relatifs à des signaux transmis par ledit dispositif noeud et reçus par ledit dispositif noeud parent sur une fenêtre glissante prédéfinie.

4. Procédé selon la revendication 1, 2 ou 3, **caractérisé en ce que** :

   - le niveau d'émission V est exprimé en décibels-microvolts ;
   - l'information de qualité de réception (SNR) est exprimée en décibels ;
   - l'information de niveau de réception (RX_LV) est exprimée en décibels-microvolts ;
   - le niveau d'émission (N_Tx_U) utilisé par ledit dispositif noeud pour émettre les signaux auxquels l'information de qualité de réception (SNR) et l'information de niveau de réception (RX_LV) se rapportent est exprimé en décibels-microvolts ;
   - le rapport signal à bruit minimum prédéfini (SNR_OK) est exprimé en décibels et est un seuil de rapport signal-à-bruit en dessous duquel il est considéré que la transmission concernée présente des risques non acceptables d'échec ;
   - le niveau réception minimum prédéfini (RX_LV_OK) est exprimé en décibels-microvolts et est un seuil de niveau de réception en dessous duquel il est considéré que la transmission concernée présente des risques non acceptables d'échec.

**5.** Procédé selon l'une quelconque des revendications 1 à 4, **caractérisé en ce que** ledit procédé est périodiquement réitéré (309).

**6.** Procédé selon l'une quelconque des revendications 1 à 5, **caractérisé en ce que**, lorsqu'un changement de topologie du réseau de communication entraîne un rattachement dudit dispositif noeud à un autre dispositif noeud parent, ledit procédé est réitéré en initialisant le niveau d'émission V dudit dispositif noeud utilisé pour transmettre des signaux dans le cadre des transmissions ascendantes au niveau d'émission maximum.

**7.** Dispositif noeud destiné à être utilisé dans un réseau de communication (121) sous forme d'arbre de dispositifs noeuds implémenté sur un réseau d'alimentation électrique, des dispositifs noeuds pouvant être relais (130 ; 131 ; 133 ; 135) entre un dispositif noeud racine de l'arbre et d'autres dispositifs noeuds (134 ; 136 ; 137 ; 138 ; 139) qui leur sont respectivement rattachés, chaque transmission dans le réseau de communication en direction du dispositif noeud racine étant ascendante et chaque transmission en direction inverse étant descendante, **caractérisé en ce que** ledit dispositif noeud comporte :

- des moyens pour obtenir (303, 304) auprès d'un dispositif noeud parent auquel ledit dispositif noeud est rattaché des informations de qualité de réception et de niveau de réception (RX_LV) vis-à-vis de signaux, lesdits signaux ayant été émis par ledit dispositif noeud et reçus par ledit dispositif noeud parent, l'information de qualité de réception étant une information de rapport signal-à-bruit (SNR) ;
- des moyens pour utiliser, pour transmettre (504) des signaux dans le cadre des transmissions descendantes, un niveau d'émission figé à un niveau d'émission maximum dudit dispositif noeud ; et
- des moyens pour déterminer (306, 308) un niveau d'émission V dudit dispositif noeud utilisé pour transmettre (503) des signaux dans le cadre des transmissions ascendantes, de sorte à continuer de permettre audit dispositif noeud parent de recevoir lesdits signaux tout en minimisant des interférences liées aux phénomènes de diaphonie, les moyens pour déterminer ledit niveau d'émission V comprenant:

- des moyens pour déterminer une première différence entre ladite information de rapport signal-à-bruit (SNR) et un rapport signal à bruit minimum prédéfini (SNR_OK) ;
- des moyens pour déterminer une seconde différence entre ledit niveau de réception (RX_LV) et un niveau réception minimum prédéfini (RX_LV_OK) ;
- des moyens pour déterminer une différence minimale entre la première et la seconde différence ;
- des moyens pour calculer le niveau d'émission V en soustrayant ladite différence minimale à un niveau d'émission (N_Tx_U) utilisé par ledit dispositif noeud pour émettre les signaux auxquels l'information de qualité de réception et l'information de niveau de réception se rapportent ;
- des moyens pour remplacer le niveau d'émission V par le niveau d'émission maximum (N_Tx_Max) si V est supérieur au niveau d'émission maximum, et par un niveau d'émission minimum prédéfini (N_Tx_Min) si V est inférieur au niveau d'émission minimum prédéfini.

**8.** Programme d'ordinateur, **caractérisé en ce qu'**il comprend des instructions pour mettre en oeuvre, par un dispositif noeud, le procédé selon l'une quelconque des revendications 1 à 6, lorsque ledit programme est exécuté par un processeur dudit dispositif noeud.

**9.** Moyens de stockage, **caractérisés en ce qu'**ils stockent un programme d'ordinateur comprenant des instructions pour mettre en oeuvre, par un dispositif noeud, le procédé selon l'une quelconque des revendications 1 à 6, lorsque ledit programme est exécuté par un processeur dudit dispositif noeud.

**Patentansprüche**

**1.** Konfigurationsverfahren einer Knotenvorrichtung in einem baumförmigen Kommunikationsnetz (121) aus Knotenvorrichtungen, das in ein Stromversorgungsnetz eingebaut ist, wobei Knotenvorrichtungen Relais (130; 131; 133; 135) zwischen einer Wurzel-Knotenvorrichtung des Baums und anderen Knotenvorrichtungen (134; 136; 137; 138; 139) sein können, die jeweils an sie angegliedert sind, wobei jede Übertragung in dem Kommunikationsnetz in Richtung der Wurzel-Knotenvorrichtung aufsteigend ist und jede Übertragung in entgegengesetzter Richtung absteigend ist, **dadurch gekennzeichnet, dass** mindestens eine Knotenvorrichtung die folgenden Schritte ausführt:

- Erhalten (303, 304) von Informationen zur Empfangsqualität und zum Empfangspegel gegenüber von Signalen bei einer übergeordneten Knotenvorrichtung, an die die Knotenvorrichtung angegliedert ist, wobei die Signale von der Knotenvorrichtung gesendet und von der übergeordneten Knotenvorrichtung empfangen wurden, wobei die Information zur Empfangsqualität eine Information zum Signal-Rausch-Verhältnis (SNR) ist;

- Nutzen eines festen Sendepegels auf einem maximalen Sendepegel der Knotenvorrichtung, um Signale im Rahmen der absteigenden Übertragungen zu übertragen (504); und

- Ermitteln (306, 308) eines Sendepegels V der Knotenvorrichtung, die zum Übertragen (503) von Signalen im Rahmen der aufsteigenden Übertragungen genutzt wird, um es der übergeordneten Knotenvorrichtung weiterhin zu erlauben, die Signale zu empfangen, während Störungen, die durch Nebensprechphänomene bedingt sind, minimiert werden, wobei der Sendepegel V durch Ausführung folgender Schritte ermittelt wird:

- Ermitteln einer ersten Differenz zwischen der Information zum Signal-Rausch-Verhältnis (SNR) und einem vorgegebenen minimalen Signal-Rausch-Verhältnis (SNR_OK);
- Ermitteln einer zweiten Differenz zwischen der Information zum Empfangspegel (RX_LV) und einem vorgegebenen minimalen Empfangspegel (RX_LV_OK);
- Bestimmen einer Minimaldifferenz zwischen der ersten und der zweiten Differenz;
- Berechnen des Sendepegels V durch Abziehen der Minimaldifferenz von einem Sendepegel (N_Tx_U), der von der Knotenvorrichtung genutzt wird, um die Signale zu senden, auf die sich die Information zur Empfangsqualität und die Information zum Empfangspegel beziehen;
- Ersetzen des Sendepegels V durch den maximalen Sendepegel (N_Tx_Max), wenn V größer als der maximale Sendepegel ist, und durch einen vorgegebenen minimalen Sendepegel (N_Tx_Min), wenn V niedriger als der vorgegebene minimale Sendepegel ist.

2. Verfahren nach Anspruch 1, **dadurch gekennzeichnet, dass** die Knotenvorrichtung die Informationen zur Empfangsqualität und zum Empfangspegel durch Senden (303) einer Anfrage an die übergeordnete Knotenvorrichtung erhält, und dadurch, dass die Informationen einer Empfangsqualität und/oder einem Empfangspegel bezogen auf die Anfrage entsprechen.

3. Verfahren nach Anspruch 1, **dadurch gekennzeichnet, dass** die Informationen einer Empfangsqualität und/oder einem Empfangspegel bezogen auf Signale entsprechen, die von der Knotenvorrichtung übertragen und von der übergeordneten Knotenvorrichtung in einem vorgegebenen gleitenden Fenster empfangen werden.

4. Verfahren nach Anspruch 1, 2 oder 3, **dadurch gekennzeichnet, dass**:

- der Sendepegel V in Dezibel-Mikrovolt ausgedrückt wird;
- die Information zur Empfangsqualität (SNR) in Dezibel ausgedrückt wird;
- die Information zum Empfangspegel (RX_LV) in Dezibel-Mikrovolt ausgedrückt wird;
- der Sendepegel (N_Tx_U), der von der Knotenvorrichtung genutzt wird, um die Signale zu senden, auf die sich die Information zur Empfangsqualität (SNR) und die Information zum Empfangspegel (RX_LV) beziehen, in Dezibel-Mikrovolt ausgedrückt wird;
- das vorgegebene minimale Signal-Rausch-Verhältnis (SNR_OK) in Dezibel ausgedrückt wird und eine Signal-Rausch-Verhältnis-Schwelle ist, unter der erachtet wird, dass die jeweilige Übertragung nicht annehmbare Fehlschlagrisiken aufweist;
- der vorgegebene minimale Empfangspegel (RX_LV_OK) in Dezibel-Microvolt ausgedrückt wird und eine Empfangspegel-Schwelle ist, unter der erachtet wird, dass die jeweilige Übertragung nicht annehmbare Fehlschlagrisiken aufweist.

5. Verfahren nach einem der Ansprüche 1 bis 4, **dadurch gekennzeichnet, dass** das Verfahren regelmäßig wiederholt wird (309).

6. Verfahren nach einem der Ansprüche 1 bis 5, **dadurch gekennzeichnet, dass**, wenn eine Änderung der Topologie des Kommunikationsnetzwerks zu einer Angliederung der Knotenvorrichtung an eine andere übergeordnete Knotenvorrichtung führt, das Verfahren wiederholt wird, indem der Sendepegel V der Knotenvorrichtung, die genutzt wird, um Signale im Rahmen der aufsteigenden Übertragungen zu übertragen, auf dem maximalen Sendepegel initialisiert wird.

7. Knotenvorrichtung, die dazu bestimmt ist, in einem baumförmigen Kommunikationsnetz (121) aus Knotenvorrichtungen genutzt zu werden, das in ein Stromversorgungsnetz eingebaut ist, wobei Knotenvorrichtungen Relais (130; 131; 133; 135) zwischen einer Wurzel-Knotenvorrichtung des Baums und anderen Knotenvorrichtungen (134; 136; 137; 138; 139) sein können, die jeweils an sie angegliedert sind, wobei jede Übertragung in dem Kommunikationsnetz in Richtung der Wurzel-Knotenvorrichtung aufsteigend ist und jede Übertragung in entgegengesetzter Richtung absteigend ist, **dadurch gekennzeichnet, dass** die Knotenvorrichtung Folgendes enthält:

- Mittel zum Erhalten (303, 304) von Informationen zur Empfangsqualität und zum Empfangspegel (RX_LV) gegenüber von Signalen bei einer übergeordneten Knotenvorrichtung, an die die Knotenvorrichtung angegliedert ist, wobei die Signale von der Knotenvorrichtung gesendet und von der übergeordneten Knotenvorrichtung empfangen wurden, wobei die Information zur Empfangsqualität eine Information zum Signal-Rausch-Verhältnis (SNR) ist;
- Mittel zum Nutzen eines festen Sendepegels auf einem maximalen Sendepegel der Knotenvorrichtung, um Signale im Rahmen der absteigenden Übertragungen zu übertragen (504); und
- Mittel zum Ermitteln (306, 308) eines Sendepegels V der Knotenvorrichtung, die zum Übertragen (503) von Signalen im Rahmen der aufsteigenden Übertragungen genutzt wird, um es der übergeordneten Knotenvorrichtung weiterhin zu erlauben, die Signale zu empfangen, während Störungen, die durch die Nebensprechphänomene bedingt sind, minimiert werden, wobei die Mittel zum Ermitteln des Sendepegels V Folgendes umfassen:

  - Mittel zum Ermitteln einer ersten Differenz zwischen der Information zum Signal-Rausch-Verhältnis (SNR) und einem vorgegebenen minimalen Signal-Rausch-Verhältnis (SNR_OK);
  - Mittel zum Ermitteln einer zweiten Differenz zwischen dem Empfangspegel (RX_LV) und einem vorgegebenen minimalen Empfangspegel (RX_LV_OK);
  - Mittel zum Bestimmen einer Minimaldifferenz zwischen der ersten und der zweiten Differenz;
  - Mittel zum Berechnen des Sendepegels V durch Abziehen der Minimaldifferenz von einem Sendepegel (N_Tx_U), der von der Knotenvorrichtung genutzt wird, um die Signale zu senden, auf die sich die Information zur Empfangsqualität und die Information zum Empfangspegel beziehen;
  - Mittel zum Ersetzen des Sendepegels V durch den maximalen Sendepegel (N_Tx_Max), wenn V größer als der maximale Sendepegel ist, und durch einen vorgegebenen minimalen Sendepegel (N_Tx_Min), wenn V niedriger als der vorgegebene minimale Sendepegel ist.

8. Computerprogramm, **dadurch gekennzeichnet, dass** es Anweisungen umfasst, um durch eine Knotenvorrichtung das Verfahren nach einem der Ansprüche 1 bis 6 durchzuführen, wenn das Programm von einem Prozessor der Knotenvorrichtung ausgeführt wird.

9. Speichermittel, **dadurch gekennzeichnet, dass** sie ein Computerprogramm speichern, das Anweisungen umfasst, um durch eine Knotenvorrichtung das Verfahren nach einem der Ansprüche 1 bis 6 durchzuführen, wenn das Programm von einem Prozessor der Knotenvorrichtung ausgeführt wird.

**Claims**

1. Method for configuring a node device in a communication network (121) in the form of a tree of node devices, implemented on an electrical power supply network, some node devices possibly being relays (130; 131; 133; 135) between a root node device of the tree and other node devices (134; 136; 137; 138; 139) that are respectively attached thereto, each transmission in the communication network in the direction of the root node device being an uplink transmission and each transmission in the opposite direction being a downlink transmission, **characterized in that** at least one node device performs the following steps:

   - obtaining (303, 304), from a parent node device to which said node device is attached, items of information in respect of quality of reception and of level of reception in relation to signals, said signals having been sent by said node device and received by said parent node device, the item of information in respect of quality of reception being an item of information in respect of signal-to-noise ratio (SNR);
   - using, to transmit (504) signals in the framework of the downlink transmissions, a send level fixed at a maximum send level of said node device; and
   - determining (306, 308) a send level V of said node device that is used to transmit (503) signals in the framework of the uplink transmissions, so as to continue to enable said parent node device to receive said signals, while minimizing interference linked with crosstalk phenomena, said send level V being determined by implementing the following steps:

     - determining a first difference between said item of information in respect of signal-to-noise ratio (SNR) and a predefined minimum signal-to-noise ratio (SNR_OK);
- determining a second difference between said item of information in respect of level of reception (RX_LV) and a predefined minimum level of reception (RX_LV_OK);
- determining a minimum difference between the first and the second difference;
- calculating the send level V by subtracting said minimum difference from a send level (N_Tx_U) used by said node device to send the signals to which the item of information in respect of quality of reception and the item of information in respect of level of reception relate;
- replacing the send level V with the maximum send level (N_Tx_Max) if V is greater than the maximum send level, and with a predefined minimum send level (N_Tx_Min) if V is lower than the predefined minimum send level.

2. Method according to Claim 1, **characterized in that** said node device obtains said items of information in respect of quality of reception and of level of reception by despatching (303) a request to said parent node device, and **in that** said items of information correspond to a quality of reception and/or a level of reception relating to said request.

3. Method according to Claim 1, **characterized in that** said items of information correspond to a quality of reception and/or a level of reception relating to signals transmitted by said node device and received by said parent node device over a predefined sliding window.

4. Method according to Claim 1, 2 or 3, **characterized in that**:

- the send level V is expressed in decibel-microvolts;
- the item of information in respect of quality of reception (SNR) is expressed in decibels;
- the item of information in respect of level of reception (RX_LV) is expressed in decibel-microvolts;
- the send level (N_Tx_U) used by said node device to send the signals to which the item of information in respect of quality of reception (SNR) and the item of information in respect of level of reception (RX_LV) relate is expressed in decibel-microvolts;
- the predefined minimum signal-to-noise ratio (SNR_OK) is expressed in decibels, and is a signal-to-noise ratio threshold below which it is considered that the transmission in question has unacceptable risks of failure;
- the predefined minimum level of reception (RX_LV_OK) is expressed in decibel-microvolts, and is a level of reception threshold below which it is considered that the transmission in question has unacceptable risks of failure.

5. Method according to any one of Claims 1 to 4, **characterized in that** said method is periodically reiterated (309).

6. Method according to any one of Claims 1 to 5, **characterized in that**, when a change of topology of the communication network leads to an attachment of said node device to another parent node device, said method is reiterated while setting the send level V of said node device that is used to transmit signals in the framework of the uplink transmissions to the maximum send level.

7. Node device intended to be used in a communication network (121) in the form of a tree of node devices, implemented on an electrical power supply network, some node devices possibly being relays (130; 131; 133; 135) between a root node device of the tree and other node devices (134; 136; 137; 138; 139) that are respectively attached thereto, each transmission in the communication network in the direction of the root node device being an uplink transmission and each transmission in the opposite direction being a downlink transmission, **characterized in that** said node device includes:

- means for obtaining (303, 304), from a parent node device to which said node device is attached, items of information in respect of quality of reception and of level of reception (RX_LV) in relation to signals, said signals having been sent by said node device and received by said parent node device, the item of information in respect of quality of reception being an item of information in respect of signal-to-noise ratio (SNR);
- means for using, to transmit (504) signals in the framework of the downlink transmissions, a send level fixed at a maximum send level of said node device; and
- means for determining (306, 308) a send level V of said node device that is used to transmit (503) signals in the framework of the uplink transmissions, so as to continue to enable said parent node device to receive said signals, while minimizing interference linked with crosstalk phenomena, the means for determining said send level V comprising:

- means for determining a first difference between said item of information in respect of signal-to-noise ratio (SNR) and a predefined minimum signal-to-noise ratio (SNR_OK);

- means for determining a second difference between said level of reception (RX_LV) and a predefined minimum level of reception (RX_LV_OK);

- means for determining a minimum difference between the first and the second difference;

- means for calculating the send level V by subtracting said minimum difference from a send level (N_Tx_U) used by said node device to send the signals to which the item of information in respect of quality of reception and the item of information in respect of level of reception relate;

- means for replacing the send level V with the maximum send level (N_Tx_Max) if V is greater than the maximum send level, and with a predefined minimum send level (N_Tx_Min) if V is lower than the predefined minimum send level.

8. Computer program, **characterized in that** it comprises instructions for implementing, through a node device, the method according to any one of Claims 1 to 6, when said program is executed by a processor of said node device.

9. Storage means, **characterized in that** they store a computer program comprising instructions for implementing, through a node device, the method according to any one of Claims 1 to 6, when said program is executed by a processor of said node device.

Fig. 1

Fig. 2

| 301 | Configuration du dispositif pour des transmissions descendantes à un niveau maximum |
| 302 | Configuration du dispositif pour des transmissions ascendantes au niveau maximum |
| 303 | Transmission au dispositif parent d'une requête LSE_REQ |
| 304 | Réception du dispositif parent d'une réponse LSE_RSP |
| 305 | Extraction d'informations SNR et RX_LV |
| 306 | Détermination, grâce aux informations SNR et RX_LV, d'un niveau d'émission pour les transmissions ascendantes |

**oui** — Ajustement? — **non**

307

308 — Reconfiguration du dispositif pour les transmissions ascendantes

309 — Délai

**Fig. 3**

400

| 401 | 402 | 403 |

**Fig. 4**

501 — Détection d'un message à transmettre

Transmission ascendante ? — 502

**oui** → 503 — Utilisation d'une configuration correspondant à un niveau d'émission ajusté

**non** → 504 — Utilisation d'une configuration correspondant à un niveau d'émission maximal

Fig. 5

601 — Réception d'une requête LSE_REQ

Dispositif nœud concerné ? — 602

**oui** → 603 — Obtention d'informations SNR et RX_LV

→ 604 — Transmission d'une réponse LSE_RSP

**non** → 605 — Requête LSE_REQ ignorée

Fig. 6

701 — Réception d'une réponse LSE_RSP

Dispositif nœud concerné ? — 702

**oui** → 703 — Traitement de la réponse LSE_RSP

**non** → 704 — Réponse LSE_RSP ignorée

Fig. 7